# EUROPÄISCHE PATENTSCHRIFT

(11) **EP 3 199 920 B1**
(45) Veröffentlichungstag und Bekanntmachung des Hinweises auf die Patenterteilung: **14.03.2018**
(21) Anmeldenummer: 16200922.9
(22) Anmeldetag: 28.11.2016
(51) Int. Cl.: G01D 11/16, G01D 5/244, G01D 5/347, B23D 1/26, B24B 19/26, G01B 3/04

(54) **VERFAHREN ZUM BEARBEITEN EINER MASSVERKÖRPERUNG**
METHOD FOR PROCESSING A MEASUREMENT SCALE
DISPOSITIF DE TRAITEMENT D'UNE REGLE DE MESURE

(30) Priorität: 26.01.2016 DE 102016201088
(43) Veröffentlichungstag der Anmeldung: 02.08.2017
(73) Patentinhaber: Dr. Johannes Heidenhain GmbH, 83301 Traunreut (DE)
(72) Erfinder: SCHWABE, Moritz, 83339 Chieming (DE); SPECKBACHER, Peter, 84558 Kirchweidach (DE); WEIDMANN, Josef, 84550 Feichten a.d. Alz (DE)

(56) Entgegenhaltungen:
- EP-B1- 1 783 463
- DE-A1- 2 002 157
- DE-A1- 2 758 014
- DE-A1- 3 004 172
- DE-C- 850 872

## Beschreibung

Die Erfindung betrifft ein Verfahren zum Bearbeiten einer Maßverkörperung einer Positionsmesseinrichtung nach Patentanspruch 1 sowie eine mit jenem Verfahren bearbeitete Maßverkörperung gemäß Anspruch 12.

Hierbei geht es um die Bearbeitung einer Maßverkörperung einer Positionsmesseinrichtung, die an einer ersten Oberfläche eine mittels einer zugeordneten Abtasteinheit abtastbare Messteilung aufweist und die an einer hiervon abgewandten, zweiten Oberfläche eingerichtet ist, an einem Träger befestigt zu werden. Zwischen der ersten und zweiten Oberfläche der Maßverkörperung verläuft ein äußerer Rand der Maßverkörperung. Dieser kann insbesondere zwischen der ersten und zweiten Oberfläche umlaufend ausgeführt sein. Konkret können z.B. die erste und zweite Oberfläche der Maßverkörperung parallel zueinander ausgerichtet sein und der äußere Rand senkrecht hierzu erstreckt sein. Die erste und zweite Oberfläche gehen dabei an einer ersten bzw. zweiten Kante jeweils in den äußeren Rand der Maßverkörperung über. D.h., die erste Oberfläche wird durch die erste Kante begrenzt und die zweite Oberfläche wird durch die zweite Kante begrenzt. Die Bearbeitung einer solchen Maßverkörperung dient der Herstellung einer definierten äußeren Kontur der Maßverkörperung und beinhaltet insbesondere auch die Bearbeitung der ersten und zweiten Kante der Maßverkörperung, an denen deren erste bzw. zweite Oberfläche in den (umlaufenden) äußeren Rand übergeht.

Die Bearbeitung der Kanten einer Maßverkörperung unterliegt im Fall hochgenauer Positionsmesseinrichtungen, wie z. B. in der EP 1 762 828 B1 beschrieben, einer Reihe von Randbedingungen. Dies gilt insbesondere beim Einsatz derartiger Messsysteme in dynamischen Anwendungen, wie z. B. bei der hochgenauen Bewegung und Positionierung von Präzisionstischen und Plattformen in der Halbleiterindustrie. Hierbei sind regelmäßig eine Minimierung der zu bewegenden Masse sowie die Berücksichtigung eines begrenzten für das Positionsmesssystem zur Verfügung stehenden Bauraumes von Bedeutung. Zur Reduzierung des Gewichtes sowie der Abmessungen einer Maßverkörperung wird diese so gestaltet, dass die Ausdehnung der ersten Oberfläche gerade ausreicht, um die abzutastende Messteilung aufzunehmen. Dies bedeutet, dass sich die Messteilung bis an den äußeren Rand der Maßverkörperung erstreckt, und hat zur Folge, dass die Genauigkeit der Messteilung durch die Bearbeitung der Kanten der Maßverkörperung beeinträchtigt werden kann.

Mit Blick auf die Befestigung der Maßverkörperung an einem Träger, z. B. in Form eines Rahmens, ist von Bedeutung, dass diese möglichst lagestabil sein soll und gleichzeitig der Befestigungsprozess die an der Maßverkörperung vorgesehene Messteilung nicht beeinträchtigen soll. Hierfür ist es beispielweise aus der EP 1 783 463 B1 bekannt, einen Maßstab einer Positionsmesseinrichtung an einem Träger durch Herstellen einer Bondverbindung zwischen dem Maßstab und dem Träger zu befestigen, wobei die Bondverbindung an mehreren, in einem zweidimensionalen Raster verteilt angeordneten, voneinander beabstandeten Oberflächenbereichen des Maßstabes ausgeführt wird.

Der Erfindung liegt das Problem zugrunde, ein Verfahren zur Bearbeitung einer Maßverkörperung eines Positionsmesssystems der eingangs genannten Art zu schaffen, das auch bei Positionsmesssystemen anwendbar ist, bei denen sich die Messteilung an der ersten Oberfläche der Maßverkörperung bis an deren Rand erstreckt, und mit dem sich zudem die Qualität der Verbindung der Maßverkörperung mit einem zugeordneten Träger unterstützen lässt. Die zweite Oberfläche soll dabei z.B. für eine Verbindung mit einem Träger durch Bondverbindungen, wie in der EP 1 783 463 B1 beschrieben, oder durch Kleben geeignet seien.

Dieses Problem wird erfindungsgemäß durch die Schaffung eines Verfahrens mit den Merkmalen des Anspruchs 1 gelöst.

Danach werden die der (mit der Messteilung versehenen) ersten Oberfläche der Maßverkörperung zugeordnete erste Kante einerseits und die der (als Befestigungsfläche dienenden) zweiten Oberfläche der Maßverkörperung zugeordnete zweite Kante andererseits derart unterschiedlich bearbeitet, dass an der zweiten Kante eine größere Materialaufwölbung gebildet wird als an der ersten Kante.

Die erfindungsgemäße Lösung beruht auf der Erkenntnis, dass beim Bearbeiten einer Kante einer Maßverkörperung regelmäßig eine Materialaufwölbung entsteht, die im Fall der ersten Kante von der ersten Oberfläche der Maßverkörperung absteht, z. B. senkrecht zu der ersten Oberfläche über diese hinausragt, und im Fall der zweiten Kante von der zweiten Oberfläche der Maßverkörperung absteht, z. B. senkrecht zu der zweiten Oberfläche über diese hinausragt.

Eine solche Aufwölbung (nachfolgend auch als Randüberhöhung bezeichnet) entsteht als Folge von Mikrorissen, die bei der Bearbeitung der Maßverkörperung im Bereich ihrer Kanten erzeugt werden. Das heißt, die Bildung einer von der ersten bzw. zweiten Oberfläche der Maßverkörperung abstehenden Aufwölbung (Randüberhöhung) bei der Bearbeitung der Maßverkörperung ist gleichzeitig ein Indikator für die Anzahl und Größe bei der Bearbeitung erzeugter Mikrorisse. Derartige Mikrorisse haben wiederum Verzerrungen der an der Maßverkörperung vorgesehenen Messteilung im Bereich des Randes der Maßverkörperung zur Folge. Diese Verzerrungen sind dabei umso stärker, je mehr Mikrorisse und desto größere Mikrorisse bei der Bearbeitung der Maßverkörperung insbesondere im Bereich der ersten Kante, also in Bereich der die (mit der Messteilung versehenen) erste Oberfläche begrenzenden Kante, auftreten. Dies bedeutet wiederum, dass die randseitige Verzerrung der Messteilung umso ausgeprägter ist, je größer die (durch jene Mikrorisse verursachte) bei der Bearbeitung der Maßverkörperung auftretende Randüberhöhung ist. Mit zunehmender Randüberhöhung wird zudem auch eine wachsende Reichweite der Mikrorisse beobachtet; d.h., mit zunehmender Randüberhöhung erstrecken sich die Mikrorisse über eine größere Ausdehnung von der Kante der Maßverkörperung in Richtung auf das Zentrum der betreffenden, zugehörigen Oberfläche.

Erfindungsgemäß wird nun die Maßverkörperung so bearbeitet, dass die hierdurch hervorgerufene Materialaufwölbung (Randüberhöhung) gerade im Bereich der ersten Kante der Maßverkörperung gering gehalten wird. Hierdurch sollen randseitige Verzerrungen der Messteilung verhindert werden, welche an der durch die erste Kante begrenzten ersten Oberfläche der Maßverkörperung vorgesehen ist. An der zweiten Kante, welche die von der ersten Oberfläche abgewandte zweite Oberfläche der Maßverkörperung begrenzt, wird demgegenüber eine vergleichsweise größere Materialaufwölbung bzw. Randerhöhung gezielt zugelassen bzw. eingestellt. (Bei der Bearbeitung der Kante kann grundsätzlich eine Materialaufwölbung oder der gegenteilige Effekt eines Zusammenziehens des Materials, resultierend in einem Randabfall, auftreten.) Es wird also gezielt angestrebt, dass eine Materialaufwölbung entsteht, um hiermit eine gewisse Vorspannung bei der Befestigung der Maßverkörperung an einem Träger über die zweite Oberfläche, z. B. durch Bondverbindungen (wie in der EP 1 783 463 B1 beschrieben), zu gewährleisten. Hierdurch kann wiederum erreicht werden, dass am Übergang zwischen Maßverkörperung und zugehörigem Träger keine Kapillarkräfte angreifen, welche die Bindungskräfte im Bereich des Randes der Maßverkörperung beeinträchtigen und daher eine Ablösung der Verbindung befördern könnten. So könnten Öldämpfe oder Feuchtigkeit in den Zwischenraum hineinkriechen und ein allmähliches Abscheren der Maßverkörperung verursachen.

Im Ergebnis werden also erfindungsgemäß die erste Kante der Maßverkörperung einerseits und deren zweite Kante gezielt unterschiedlich bearbeitet, so dass an der ersten Kante eine möglichst geringfügige Materialaufwölbung bzw. Randüberhöhung auftritt, während an der zweiten Kante gezielt eine Materialaufwölbung bzw. Randüberhöhung einer bestimmten Größe zugelassen werden soll.

Die Bearbeitung der Maßverkörperung, insbesondere an deren äußerem Rand und damit an der ersten und zweiten Kante kann mechanisch erfolgen, z. B. durch Sägen, Schleifen oder Fräsen, oder auch durch Bearbeitung mittels Laser.

Hinsichtlich der Entstehung von Mikrorissen und damit einer Randüberhöhung kommt es aber nicht nur auf das ausgewählte Bearbeitungsverfahren an, sondern auch auf weitere Parameter der Bearbeitung, wie z. B. die Zustellung, den Vorschub oder die Schnittgeschwindigkeit eines Werkzeugs. Darüber hinaus können auch spezifische Eigenschaften des Werkzeugs, wie z. B. das Material eines Werkzeugteiles, Korndurchmesser und Kornbindung eine Rolle spielen.

Im Bereich der ersten Kante erfolgt die Bearbeitung der Maßverkörperung bevorzugt derart, dass dort eine Materialaufwölbung bzw. Randüberhöhung von höchstens 20 nm, besonders bevorzugt eine Materialaufwölbung bzw. Randüberhöhung von weniger als 10 nm auftritt.

Die Reichweite der Randüberhöhung - und damit der Mikrorisse - von der ersten Kante aus gemessen in Richtung auf das Innere der ersten Oberfläche soll höchstens 500 µm und besonders bevorzugt höchstens 200 µm betragen.

An der zweiten Kante der Maßverkörperung, also auf derjenigen Seite der Maßverkörperung, welche der Befestigung an einem Trägerkörper dient, soll die Randüberhöhung zwischen 10 nm und 500 nm, besonders bevorzugt zwischen 20 nm und 100 nm liegen. Und die Reichweite der Randüberhöhung und damit der durch die Bearbeitung entstandenen Mikrorisse soll auf 2.000 µm und besonders bevorzugt auf 500 µm begrenzt sein.

Unter der Reichweite der Randüberhöhung, ausgehend von der ersten oder zweiten Kante, wird dabei die Ausdehnung desjenigen Oberflächenbereiches (und zwar senkrecht zu der
Längserstreckung der ersten bzw. zweiten Kante und entlang der zugehörigen ersten oder zweiten Oberfläche) in Richtung auf das Innere der ersten bzw. zweiten Oberfläche verstanden, in dem die Ebenheit der ersten bzw. zweiten Oberfläche als Folge der Bearbeitung der zugehörigen ersten oder zweiten Kante und der hierdurch erzeugten Materialaufwölbung gestört ist. Dabei wird zugrunde gelegt, dass auch in den durch die Bearbeitung der ersten oder zweiten Kante nicht beeinträchtigten Bereichen der ersten oder zweiten Oberfläche (zufällige) Abweichungen von einer ideal ebenen Oberfläche bestehen, die die Rauheit der Oberfläche widerspiegeln. In den an die erste oder zweite Kante bzw. die jeweilige dortige Materialaufwölbung angrenzenden Oberflächenbereichen liegen jedoch Abweichungen von der Ebenheit vor, die größer sind als die Rauheit der Oberfläche in den nicht gestörten (inneren) Bereichen. Die Reichweite der Randüberhöhung gibt somit die Reichweite desjenigen Oberflächenbereiches - ausgehend von der ersten oder zweiten Kante - an, in dem die Abweichungen von der Ebenheit der Oberfläche (bedingt durch die Bearbeitung der entsprechenden Kante) größer sind als in den durch die Bearbeitung nicht beeinträchtigten Oberflächenbereichen.

Eine Verringerung der Anzahl und Größe von Mikrorissen durch eine entsprechende Bearbeitung der ersten Kante der Maßverkörperung geht mit einer entsprechenden Reduzierung der Flächenrauheit einher. So lässt sich eine Rauheit (Rq-Wert) von weniger als 80 nm erreichen. Bei der Verwendung von Glaskeramik für den Grundkörper der Maßverkörperung ist dessen Oberfläche damit auch nach der Bearbeitung transparent. Dies kann genutzt werden, um die Qualität der Montage der Maßverkörperung optisch zu prüfen. Des Weiteren verbessert die Reduzierung von Bearbeitungsstress beim Bearbeiten der Kanten die Geradheit der Maßverkörperung.

Die erste bzw. zweite Oberfläche der Maßverkörperung muss dabei nicht zwingend über die zugehörige erste bzw. zweite Kante unmittelbar in einen seitlichen äußeren Rand übergehen, welcher sich im Wesentlichen senkrecht zur ersten und zweiten Oberfläche erstreckt. Vielmehr kann an die erste Kante und/oder die zweite Kante zunächst eine abgeschrägte Fase anschließen, die ihrerseits in den äußeren seitlichen Rand übergeht.

Eine Maßverkörperung, bearbeitet durch ein Verfahren der vorstehend genannten Art, ist durch die Merkmale des Anspruchs 12 charakterisiert.

Weiterbildungen jener Maßverkörperung sind in den hiervon abhängigen Ansprüchen angegeben.

Die Anwendung des erfindungsgemäßen Verfahrens an einer Maßverkörperung lässt sich am resultierenden Produkt in unterschiedlicher Weise nachprüfen, z. B. durch optische Methoden zur Ermittlung der Kantenqualität (insbesondere anhand der Rauheit und/oder Transparenz der Oberfläche), wofür ein Lichtmikroskop herangezogen werden kann, oder durch Messung der Randüberhöhung, z. B. unter Verwendung eines Weißlichtmikroskopes, oder durch Messung der Mikrorisse, z. B. mittels einer Mikrorissanalyse durch Abtragen des Materials.

Weitere Einzelheiten und Vorteile der Erfindung werden bei der nachfolgenden Beschreibung von Ausführungsbeispielen anhand der Figuren deutlich werden.

Es zeigen:
- Figur 1: einen schematischen Querschnitt durch eine Maßverkörperung mit einer mit einer Messteilung versehenen ersten Oberfläche und einer hiervon abgewandten, zur Befestigung der Maßverkörperung an einem Träger vorgesehenen zweiten Oberfläche, wobei die Kanten an der ersten und zweiten Oberfläche unterschiedlich bearbeitet sind;
- Figur 1A: einen vergrößerten Ausschnitt der Maßverkörperung aus Figur 1 im Bereich der ersten Kante;
- Figur 1B: einen vergrößerten Ausschnitt der Maßverkörperung aus Figur 1 im Bereich der zweiten Kante;
- Figur 2: eine Abwandlung der Maßverkörperung aus Figur 1 im Querschnitt;
- Figur 2A: einen vergrößerten Ausschnitt der Maßverkörperung aus Figur 2 im Bereich der ersten Kante;
- Figur 2B: einen vergrößerten Ausschnitt der Maßverkörperung aus Figur 2 im Bereich der zweiten Kante.

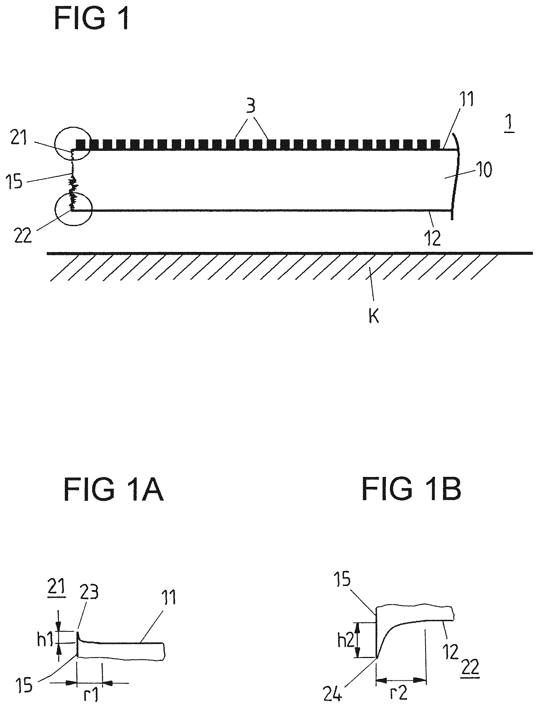

Figur 1 zeigt einen Querschnitt durch eine Maßverkörperung 1, die an einer ersten großflächig erstreckten Oberfläche 11 mit einer Messteilung 3 versehen ist und die an der hiervon abgewandten großflächigen zweiten Oberfläche 12 zur Verbindung mit einem Trägerkörper K eingerichtet ist. Die beiden Oberflächen 11, 12 sind plan ausgebildet und verlaufen im Ausführungsbeispiel im Wesentlichen parallel zueinander.

Der Grundkörper 10 der Maßverkörperung 1 besteht bevorzugt aus einem Material, dessen thermischer Ausdehnungskoeffizient möglichst nahe bei null liegt, zum Beispiel aus Glaskeramik (ZERODUR). Die Maßverkörperung 1 kann beispielsweise als ein längserstreckter Maßstab für die Längenmessung ausgebildet sein oder als eine Messplatte für zweidimensionale Positionsmessungen. Entsprechend kann es sich bei der Messteilung um eine Gitterteilung, im zweidimensionalen Fall z. B. um ein Kreuzgitter handeln.

Die Messteilung 3 ist so ausgeführt, dass sie sich mittels einer zugeordneten Abtasteinheit, zum Beispiel optisch, magnetisch oder induktiv, abtasten lässt. Zur Minimierung des Gewichts sowie des Raumbedarfs der Maßverkörperung 1 erstreckt sich deren Messteilung 3 bis zur Kante 21 der ersten Oberfläche 11, die einen Übergang zum (umlaufenden) äußeren Rand 15 der Maßverkörperung 1 bildet. Der äußere Rand 15 der Maßverkörperung 1 verläuft zwischen deren erster Oberfläche 11 und deren zweiter Oberfläche 12. Er ist im Wesentlichen senkrecht zu den besagten Oberflächen 11, 12 orientiert. Der äußere Rand 15 umschließt die Maßverkörperung 1 seitlich.

Zur Herstellung einer definierten Außenkontur wird die Maßverkörperung 1 bearbeitet, zum Beispiel mechanisch durch Fräsen, Schleifen oder Sägen oder auch durch Materialabtrag mittels Laser. Vorliegend erfolgt die Bearbeitung derart, dass an einer ersten Kante 21 der Maßverkörperung, an welcher die erste Oberfläche 11 in deren Rand 15 übergeht, eine andere Bearbeitung erfolgt als an einem zweiten Rand 22 der Maßverkörperung, an welchem deren zweite Oberfläche 12 in den äußeren Rand 15 übergeht.

Das Ergebnis der Bearbeitung im Bereich der ersten und zweiten Kante 21, 22 ist vergrößert in den Figuren 1A und 1B dargestellt.

Im Bereich der ersten Kante 21 ist durch die Bearbeitung eine Materialaufwölbung bzw. Randüberhöhung 23 entstanden, deren Höhe h1 (definiert als Ausdehnung senkrecht zur ersten Oberfläche 11) auf maximal 20 nm, bevorzugt auf weniger als 10 nm begrenzt ist. Die Reichweite r1 der Materialaufwölbung bzw. Randüberhöhung 23 (definiert als deren Ausdehnung von der ersten Kante 21 in Richtung auf das Innere der ersten Oberfläche 11) soll höchstens 500 µm und besonders bevorzugt weniger als 200 µm betragen.
Da die erste Kante 21 die erste Oberfläche 11 der Maßverkörperung 1 begrenzt, welche mit der Messteilung 3 versehen ist, wird hierdurch die Anzahl und Ausdehnung der Mikrorisse minimiert, welche zu einer Verzerrung der bis an den Rand 15 der Maßverkörperung 1 erstreckten Messteilung 3 führen könnten.

An der gegenüberliegenden, zweiten Oberfläche 12 der Maßverkörperung 1 ist demgegenüber eine Materialaufwölbung bzw. Randüberhöhung 24 im Bereich der dortigen Kante 22 durchaus gewünscht, um eine Vorspannung bei der Befestigung der Maßverkörperung 1 über die zweite Oberfläche 12 an einem Trägerkörper K hervorzurufen. In diesem Fall soll die Höhe h2 der Materialaufwölbung bzw. Randüberhöhung 24 (definiert als die Ausdehnung der Materialaufwölbung bzw. Randüberhöhung 24 senkrecht zur zweiten Oberfläche 12) zwischen 10 nm und 500 nm, bevorzugt zwischen 20 nm und 100 nm liegen. Und die Reichweite r2 der Materialaufwölbung bzw. Randüberhöhung (definiert als deren Ausdehnung von der zweiten Kante 22 in Richtung auf das Innere der zweiten Oberfläche 12) soll auf 2.000 µm, bevorzugt auf 500 µm begrenzt sein.

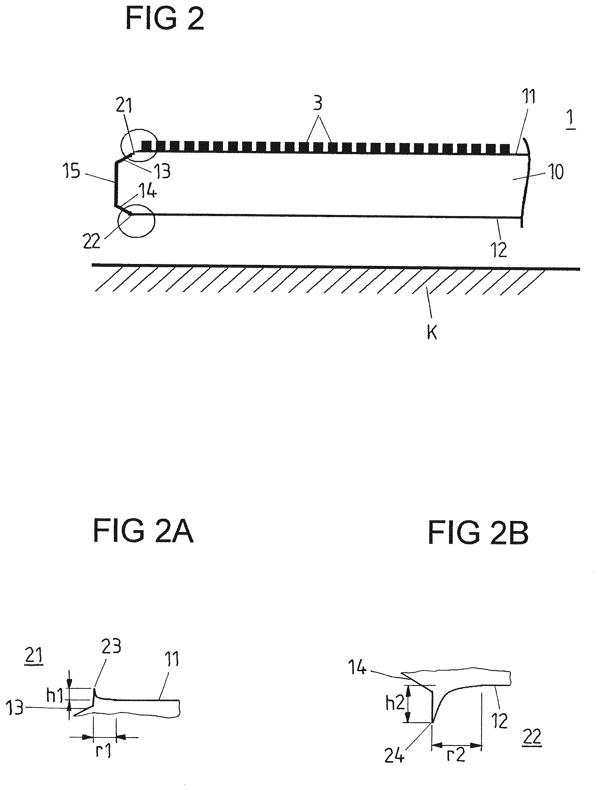

In den Figuren 2, 2A und 2B ist eine Abwandlung der Anordnung aus den Figuren 1, 1A und 1B dargestellt, wobei der Unterschied darin besteht, dass gemäß den Figuren 2, 2A und 2B die erste bzw. zweite Oberfläche 11, 12 an der zugehörigen ersten bzw. zweiten Kante 21, 22 nicht unmittelbar in den seitlichen äußeren Rand 15 übergeht. Vielmehr schließt an die erste bzw. zweite Kante 21, 22 jeweils zunächst eine abgeschrägte Fase 13 bzw. 14 an, die sodann (mit ihrem der jeweiligen Kante 21,22 abgewandten Endabschnitt) ihrerseits in den seitlichen äußeren Rand 15 übergeht. Das heißt, die erste bzw. zweite Kante 21, 22 der Maßverkörperung 1 aus den Figuren 2, 2A und 2B liegt jeweils zwischen der zugehörigen ersten oder zweiten Oberfläche und einer hiervon abgehenden, schräg verlaufenden Fase 13, 14, welche wiederum jeweils in den seitlichen äußeren Rand 15 übergeht.

Damit ist die vorliegend relevante erste Kante 21 an der ersten Oberfläche 11 der Maßverkörperung 1 diejenige Kante, welche jene erste Oberfläche 11 begrenzt und bei deren Bearbeitung Mikrorisse im Bereich der an der ersten Oberfläche 11 vorgesehenen Messteilung 3 auftreten können.

Und die relevante zweite Kante 22 im Bereich der zweiten Oberfläche 12 ist diejenige Kante, welche die zweite Oberfläche 12 begrenzt und bei deren Bearbeitung eine Materialaufwölbung bzw. Randüberhöhung gebildet wird, die von der zweiten Oberfläche 12 (im Wesentlichen senkrecht zu jener Oberfläche) absteht, so dass beim Aufsetzen der Maßverkörperung 1 auf einen Trägerkörper K mit der zweiten Oberfläche 12 jene zweite Oberfläche 12 zunächst mit der Materialaufwölbung bzw. Randüberhöhung 24 an der zweiten Kante 22 mit der zugewandten Oberfläche jenes Trägerkörpers K in Kontakt tritt.

Die Bearbeitung einer jeweiligen Kante 21, 22 der Maßverkörperung 1 kann dabei einerseits gemeinsam mit einer Bearbeitung angrenzender Bereiche des seitlichen äußeren Randes 15 der Maßverkörperung 1 und/oder der ersten bzw. zweiten Oberfläche 11, 12 erfolgen. Weiterhin kann eine jeweilige Kante 21, 22 der Maßverkörperung 1 auch einer gezielten, speziell auf die jeweilige Kante 21 oder 22 gerichteten Nachbearbeitung unterzogen werden, um die vorstehend beschriebenen Materialauswölbungen bzw. Randüberhöhungen zu bilden.

## Patentansprüche

1. Verfahren zum Bearbeiten einer Maßverkörperung (1) eines Positionsmesssystems, die an einer ersten Oberfläche (11) eine Messteilung (3) aufweist und die an einer zweiten Oberfläche (12) zur Befestigung an einem Trägerkörper (K) eingerichtet ist und bei der zwischen der ersten und zweiten Oberfläche (11, 12) ein seitlicher äußerer Rand (15) der Maßverkörperung (1) verläuft und die erste und zweite Oberfläche (11, 12) im Bereich des seitlichen äußeren Randes (15) durch eine erste bzw. zweite Kante (21, 22) begrenzt sind, wobei beim Bearbeiten der Maßverkörperung (1) zur Bildung einer definierten äußeren Kontur der Maßverkörperung (1) an der ersten Kante (21) und der zweiten Kante (22) der Maßverkörperung (1) jeweils eine Materialaufwölbung (23, 24) gebildet wird, die von der jeweils zugehörigen Oberfläche (11, 12) der Maßverkörperung (1) absteht,
**dadurch gekennzeichnet,**
**dass** die Maßverkörperung (1) an der ersten Kante (21) einerseits und der zweiten Kante (22) andererseits derart unterschiedlich bearbeitet wird, dass die Ausdehnung (h1) der Materialaufwölbung (23) an der ersten Kante (21) senkrecht zu der ersten Oberfläche (11) kleiner ist als die Ausdehnung (h2) der Materialaufwölbung (24) an der zweiten Kante (22) senkrecht zu der zweiten Oberfläche (12), wobei die Maßverkörperung (1) an der zweiten Kante (22) derart behandelt wird, dass die Ausdehnung (h2) der Materialaufwölbung (24) an der zweiten Kante (22) senkrecht zu der zweiten Oberfläche (12) zwischen 10 nm und 500 nm beträgt, und dass sich die an der zweiten Kante (22) gebildete Materialaufwölbung (24) um weniger als 2.000 µm, insbesondere um weniger als 500 µm, von der zweiten Kante (22) in Richtung auf das innere der zweiten Oberfläche (12) erstreckt.

2. Verfahren nach Anspruch 1, **dadurch gekennzeichnet, dass** die Maßverkörperung (1) an der ersten Kante (21) einerseits und der zweiten Kante (22) andererseits derart unterschiedlich bearbeitet wird, dass die Ausdehnung (h2) der Materialaufwölbung (24) an der zweiten Kante (22) um mindestens 25%, insbesondere um mindestens 50%, größer ist als die Ausdehnung (h1) der Materialaufwölbung (23) an der ersten Kante (21).

3. Verfahren nach Anspruch 1 oder 2, **dadurch gekennzeichnet, dass** die Maßverkörperung (1) an der ersten Kante (21) und/oder an der zweiten Kante (22) mechanisch bearbeitet wird.

4. Verfahren nach Anspruch 3, **dadurch gekennzeichnet, dass** die Maßverkörperung (1) an der ersten Kante (21) und/oder an der zweiten Kante (22) durch Fräsen, Schleifen oder Sägen bearbeitet wird.

5. Verfahren nach einem der vorherigen Ansprüche, **dadurch gekennzeichnet, dass** die Maßverkörperung (1) an der ersten Kante (21) und/oder an der zweiten Kante (22) durch Laserstrahlung bearbeitet wird.

6. Verfahren nach einem der vorherigen Ansprüche, **dadurch gekennzeichnet, dass** die Maßverkörperung (1) an der ersten Kante (21) derart behandelt wird, dass die Ausdehnung (h1) der Materialaufwölbung (23) an der ersten Kante (21) senkrecht zu der ersten Oberfläche (11) höchstens 20 nm beträgt.

7. Verfahren nach Anspruch 6, **dadurch gekennzeichnet, dass** die Maßverkörperung (1) an der ersten Kante (21) derart behandelt wird, dass die Ausdehnung (h1) der Materialaufwölbung (23) an der ersten Kante (21) senkrecht zu der ersten Oberfläche (11) höchstens 10 nm beträgt.

8. Verfahren nach Anspruch 7, **dadurch gekennzeichnet, dass** die Maßverkörperung (1) an der zweiten Kante (22) derart behandelt wird, dass die Ausdehnung (h2) der Materialaufwölbung (24) an der zweiten Kante (22) senkrecht zu der zweiten Oberfläche (12) zwischen 20 nm und 100 nm beträgt.

9. Verfahren nach einem der vorherigen Ansprüche, **dadurch gekennzeichnet, dass** die Maßverkörperung (1) an der ersten Kante (21) derart bearbeitet wird, dass sich die an der ersten Kante (21) gebildete Materialaufwölbung (23) um weniger als 500 µm, insbesondere um weniger als 200 µm, von der ersten Kante (21) in Richtung auf das Innere der ersten Oberfläche (11) erstreckt.

10. Maßverkörperung eines Positionsmesssystems, mit
- einer ersten Oberfläche (11), an der eine Messteilung (3) ausgebildet ist,
- einer zweiten Oberfläche (12), die zum Befestigen der Maßverkörperung (1) an einem Trägerkörper (K) eingerichtet ist, und
- einem äußeren seitlichen Rand (15), der zwischen der ersten und zweiten Oberfläche (11, 12) der Maßverkörperung (1) verläuft,
wobei die erste und zweite Oberfläche (11, 12) der Maßverkörperung (1) im Bereich des seitlichen äußeren Randes (15) durch eine erste bzw. zweite Kante (21, 22) begrenzt sind und wobei an der ersten und zweiten Kante (21, 22) jeweils eine Materialaufwölbung (23, 24) von der zugehörigen ersten oder zweiten Oberfläche (11, 12) absteht,
**dadurch gekennzeichnet,**
**dass** die Materialaufwölbung (23) an der ersten Kante (21) der Maßverkörperung (1) mit einer Ausdehnung (h1) senkrecht zu der ersten Oberfläche (11) von jener ersten Oberfläche (11) absteht, welche kleiner ist als die Ausdehnung (h2), mit der die Materialaufwölbung (24) an der zweiten Kante (22) der Maßverkörperung (1) senkrecht zu der zweiten Oberfläche (12) von jener zweiten Oberfläche (12) absteht, und dass die Ausdehnung (h2) der Materialaufwölbung (24) an der zweiten Kante (22) senkrecht zu der zweiten Oberfläche (12) zwischen 10 nm und 500 nm beträgt, und dass sich die an der zweiten Kante (22) gebildete Materialaufwölbung (24) um weniger als 2.000 µm, insbesondere um weniger als 500 µm, von der zweiten Kante (22) in Richtung auf das Innere der zweiten Oberfläche (12) erstreckt.

11. Maßverkörperung nach Anspruch 10, **dadurch gekennzeichnet, dass** die Maßverkörperung (1) einen Grundkörper (10) aus Glaskeramik aufweist.

12. Maßverkörperung nach Anspruch 10 oder 11, **dadurch gekennzeichnet, dass** die Ausdehnung (h1) der Materialaufwölbung (23) an der ersten Kante (21) der Maßverkörperung (1) senkrecht zu der ersten Oberfläche (11) höchstens 20 nm, insbesondere höchstens 10 nm, beträgt.

13. Maßverkörperung nach einem der Ansprüche 10 bis 12, **dadurch gekennzeichnet, dass** die Ausdehnung (h2) der Materialaufwölbung (24) an der zweiten Kante (22) der Maßverkörperung (1) senkrecht zu der zweiten Oberfläche (12) zwischen 10 nm und 500 nm, insbesondere zwischen 20 nm und 100 nm, beträgt.

14. Maßverkörperung nach einem der Ansprüche 10 bis 13, behandelt durch ein Verfahren nach einem der Ansprüche 1 bis 11.

## Claims

1. Method for machining a measurement scale (1) of a position measuring system which, on a first surface (11), has a measuring graduation (3) and which, on a second surface (12), is configured to be fixed to a carrier body (K), and in which a lateral outer side edge (15) of the measurement scale (1) extends between the first and second surface (11, 12) and the first and second surface (11, 12) are bounded in the region of the lateral outer side edge (15) by a first and second edge (21, 22), wherein, when machining the measurement scale (1) to form a defined outer contour of the measurement scale (1), a respective material ridge (23, 24) is formed on the first edge (21) and the second edge (22) of the measurement scale (1), which projects from the respectively associated surface (11, 12) of the measurement scale (1),
**characterized in that**
the measurement scale (1) is machined differently on the first edge (21), on the one hand, and the second edge (22), on the other hand, in such a way that the extent (h1) of the material ridge (23) on the first edge (21) at right angles to the first surface (11) is smaller than the extent (h2) of the material ridge (24) on the second edge (22) at right angles to the second surface (12), wherein the measurement scale (1) is treated on the second edge (22) in such a way that the extent (h2) of the material ridge (24) on the second edge (22) at right angles to the second surface (12) is between 10 nm and 500 nm, and that the material ridge (24) formed on the second edge (22) extends by less than 2000 µm, in particular by less than 500 µm, from the second edge (22) in the direction of the interior of the second surface (12).

2. Method according to Claim 1, **characterized in that** the measurement scale (1) is machined differently on the first edge (21), on the one hand, and the second edge (22), on the other hand, in such a way that the extent (h2) of the material ridge (24) on the second edge (22) is greater by at least 25%, in particular by at least 50%, than the extent (h1) of the material ridge (23) on the first edge (21).

3. Method according to Claim 1 or 2, **characterized in that** the measurement scale (1) is machined mechanically on the first edge (21) and/or on the second edge (22).

4. Method according to Claim 3, **characterized in that** the measurement scale (1) is machined on the first edge (21) and/or on the second edge (22) by milling, grinding or sawing.

5. Method according to one of the preceding claims, **characterized in that** the measurement scale (1) is machined on the first edge (21) and/or on the second edge (22) by laser radiation.

6. Method according to one of the preceding claims, **characterized in that** the measurement scale (1) is treated on the first edge (21) in such a way that the extent (h1) of the material ridge (23) on the first edge (21) at right angles to the first surface (11) is at most 20 nm.

7. Method according to Claim 6, **characterized in that** the measurement scale (1) is treated on the first edge (21) in such a way that the extent (h1) of the material ridge (23) on the first edge (21) at right angles to the first surface (11) is at most 10 mn.

8. Method according to Claim 7, **characterized in that** the measurement scale (1) is treated on the second edge (22) in such a way that the extent (h2) of the material ridge (24) on the second edge (22) at right angles to the second surface (12) is between 20 nm and 100 nm.

9. Method according to one of the preceding claims, **characterized in that** the measurement scale (1) is machined on the first edge (21) in such a way that the material ridge (23) formed on the first edge (21) extends by less than 500 µm, in particular by less than 200 µm, from the first edge (21) in the direction of the interior of the first surface (11).

10. Measurement scale of a position measuring system, having
- a first surface (11), on which a measuring graduation (3) is formed,
- a second surface (12), which is configured to fix the measurement scale (1) to a carrier body (K), and
- an outer lateral side edge (15), which extends between the first and second surface (11, 12) of the measurement scale (1),
the first and second surface (11, 12) of the measurement scale (1) being bounded in the region of the lateral outer side edge (15) by a first and second edge (21, 22), and, on the first and second edge (21, 22), a respective material ridge (23, 24) projecting from the associated first or second surface (11, 12),
**characterized in that**
the material ridge (23) on the first edge (21) of the measurement scale (1) projects at right angles to the first surface (11) from that first surface (11) with an extent (h1) which is smaller than the extent (h2) with which the material ridge (24) on the second edge (22) of the measurement scale (1) projects at right angles to the second surface (12) from that second surface (12), and **in that** the extent (h2) of the material ridge (24) on the second edge (22) at right angles to the second surface (12) is between 10 nm and 500 nm, and **in that** the material ridge (24) formed on the second edge (22) extends by less than 2000 µm, in particular by less than 500 µm, from a second edge (22) in the direction of the interior of the second surface (12).

11. Measurement scale according to Claim 10, **characterized in that** the measurement scale (1) has a base body (10) of glass ceramic.

12. Measurement scale according to Claim 10 or 11, **characterized in that** the extent (h1) of the material ridge (23) on the first edge (21) of the measurement scale (1) at right angles to the first surface (11) is at most 20 nm, in particular at most 10 nm.

13. Measurement scale according to one of Claims 10 to 12, **characterized in that** the extent (h2) of the material ridge (24) on the second edge (22) of the measurement scale (1) at right angles to the second surface (12) is between 10 nm and 500 nm, in particular between 20 nm and 100 nm.

14. Measurement scale according to one of Claims 10 to 13, treated by a method according to one of Claims 1 to 11.

## Revendications

1. Procédé de traitement d'une règle de mesure (1) d'un système de mesure de position, qui présente sur une première surface (11) une graduation de mesure (3) et qui est conçue sur une deuxième surface (12) en vue de la fixation à un corps de support (K) et dans laquelle un bord latéral extérieur (15) de la règle de mesure (1) s'étend entre la première et la deuxième surfaces (11, 12) et la première et la deuxième surfaces (11, 12) sont limitées dans la région du bord latéral extérieur (15) par une première ou une deuxième arête (21, 22), dans lequel lors du traitement de la règle de mesure (1) pour la formation d'un contour extérieur défini de la règle de mesure (1) on forme à la première arête (21) et à la deuxième arête (22) de la règle de mesure (1) chaque fois un renflement de matière (23, 24), qui est en saillie sur la surface respectivement correspondante (11, 12) de la règle de mesure (1),
**caractérisé en ce que** l'on traite la règle de mesure (1) différemment à la première arête (21) d'une part et à la deuxième arête (22) d'autre part, de telle manière que l'extension (h1) du renflement de matière (23) à la première arête (21) perpendiculairement à la première surface (11) soit plus petite que l'extension (h2) du renflement de matière (24) à la deuxième arête (22) perpendiculairement à la deuxième surface (12), dans lequel on traite la règle de mesure (1) à la deuxième arête (22) de telle manière que l'extension (h2) du renflement de matière (24) à la deuxième arête (22) perpendiculairement à la deuxième surface (12) vaille entre 10 nm et 500 nm, et **en ce que** le renflement de matière (24) formé à la deuxième arête (22) s'étend de moins de 2000 µm, en particulier de moins de 500 µm, à partir de la deuxième arête (22) en direction de l'intérieur de la deuxième surface (12).

2. Procédé selon la revendication 1, **caractérisé en ce que** l'on traite la règle de mesure (1) différemment à la première arête (21) d'une part et à la deuxième arête (22) d'autre part, de telle manière que l'extension (h2) du renflement de matière (24) à la deuxième arête (22) soit d'au moins 25 %, en particulier d'au moins 50 %, plus grande que l'extension (h1) du renflement de matière (23) à la première arête (21).

3. Procédé selon la revendication 1 ou 2, **caractérisé en ce que** l'on traite mécaniquement la règle de mesure (1) à la première arête (21) et/ou à la deuxième arête (22).

4. Procédé selon la revendication 3, **caractérisé en ce que** l'on traite la règle de mesure (1) à la première arête (21) et/ou à la deuxième arête (22) par fraisage, ponçage ou sciage.

5. Procédé selon l'une quelconque des revendications précédentes, **caractérisé en ce que** l'on traite la règle de mesure (1) à la première arête (21) et/ou à la deuxième arête (22) par un rayonnement laser.

6. Procédé selon l'une quelconque des revendications précédentes, **caractérisé en ce que** l'on traite la règle de mesure (1) à la première arête (21) de telle manière que l'extension (h1) du renflement de matière (23) à la première arête (21) perpendiculairement à la première surface (11) vaille au maximum 20 nm.

7. Procédé selon la revendication 6, **caractérisé en ce que** l'on traite la règle de mesure (1) à la première arête (21) de telle manière que l'extension (h1) du renflement de matière (23) à la première arête (21) perpendiculairement à la première surface (11) vaille au maximum 10 nm.

8. Procédé selon la revendication 7, **caractérisé en ce que** l'on traite la règle de mesure (1) à la deuxième arête (22) de telle manière que l'extension (h2) du renflement de matière (24) à la deuxième arête (22) perpendiculairement à la deuxième surface (12) vaille entre 20 nm et 100 nm.

9. Procédé selon l'une quelconque des revendications précédentes, **caractérisé en ce que** l'on traite la règle de mesure (1) à la première arête (21) de telle manière que le renflement de matière (23) formé à la première arête (21) s'étende de moins de 500 µm, en particulier de moins de 200 µm, à partir de la première arête (21) en direction de l'intérieur de la première surface (11).

10. Règle de mesure d'un système de mesure de position, avec
- une première surface (11), sur laquelle est formée une graduation de mesure (3),
- une deuxième surface (12), qui est conçue pour la fixation de la règle de mesure (1) à un corps de support (K), et
- un bord latéral extérieur (15), qui s'étend entre la première et la deuxième surfaces (11, 12) de la règle de mesure (1),
dans laquelle la première et la deuxième surfaces (11, 12) de la règle de mesure (1) sont limitées dans la région du bord latéral extérieur (15) par une première ou une deuxième arête (21, 22) et dans laquelle un renflement de matière (23, 24) est saillant respectivement sur la première ou la deuxième surface correspondante (11, 12) à la première et à la deuxième arêtes (21, 22), **caractérisée en ce que** le renflement de matière (23) à la première arête (21) de la règle de mesure (1) fait saillie sur la première surface (11) avec une extension (h1) perpendiculairement à cette première surface (11), qui est plus petite que l'extension (h2), avec laquelle le renflement de matière (24) à la deuxième arête (22) fait saillie sur la deuxième surface (12) perpendiculairement à cette deuxième surface (12), et **en ce que** l'extension (h2) du renflement de matière (24) à la deuxième arête (22) perpendiculairement à la deuxième surface (12) vaut entre 10 nm et 500 nm, et **en ce que** le renflement de matière (24) formé à la deuxième arête (22) s'étend de moins de 2000 µm, en particulier de moins de 500 µm, à partir de la deuxième arête (22) en direction de l'intérieur de la deuxième surface (12).

11. Règle de mesure selon la revendication 10, **caractérisée en ce que** la règle de mesure (1) présente un corps de base (10) en vitrocéramique.

12. Règle de mesure selon la revendication 10 ou 11, **caractérisée en ce que** l'extension (h1) du renflement de matière (23) à la première arête (21) de la règle de mesure (1) perpendiculairement à la première surface (11) vaut au maximum 20 nm, en particulier au maximum 10 nm.

13. Règle de mesure selon l'une quelconque des revendications 10 à 12, **caractérisée en ce que** l'extension (h2) du renflement de matière (24) à la deuxième arête (22) de la règle de mesure (1) perpendiculairement à la deuxième surface (12) vaut entre 10 nm et 500 nm, en particulier entre 20 nm et 100 nm.

14. Règle de mesure selon l'une quelconque des revendications 10 à 13, traitée par un procédé selon l'une quelconque des revendications 1 à 11.
